# EUROPEAN PATENT APPLICATION

(11) **EP 1 100 229 A2**
(43) Date of publication of application: **16.05.2001**
(21) Application number: 00309944.7
(22) Date of filing: 09.11.2000
(51) Int. Cl.: H04L 12/28, H04L 12/56, H04L 29/06

(54) **Communication control apparatus and method thereof**

(30) Priority: 12.11.1999 JP 32344899
(71) Applicant: SONY CORPORATION, Tokyo (JP)
(72) Inventor: Takagi, Tetsuya, c/o Sony Corporation, Tokyo (JP)
(74) Representative: Nicholls, Michael John

(57) **Abstract**

When attached to a host device, a communication control apparatus inputs attribute information indicating attributes of the host device. Based on the attribute information, the communication control apparatus constructs a protocol stack comprising at least one of a plurality of protocols. The communication control apparatus controls data transmission and reception for the host device via a logical interface (service access point).

## Description

The present invention relates to a communication control apparatus and a method thereof for sending and receiving data between a plurality of devices included in a short-distance wireless communication network or between this network and an outside communication network.

Recently, Bluetooth technology is applied to development of wireless LAN (Local Area Network) systems. A Bluetooth system sends and receives data between devices by using a radio wave in the 2.4 GHz frequency band and performing processing which complies with a frequency hopping system.

Bluetooth systems are now under joint development by industries in categories of computer, telecommunications, networking, and the like. Using wireless communication technology, a Bluetooth system implements ad hoc radio frequency (RF) networking between a plurality of personal computers or devices. The Bluetooth system is settled by five companies in United States, Europe, and Japan participating in Bluetooth SIG (Special Interest Group). The Bluetooth system allows notebook computers, PDAs (Personal Digital Assistants), and mobile telephones to share information or various services with personal computers with no need for troublesome cable connections.

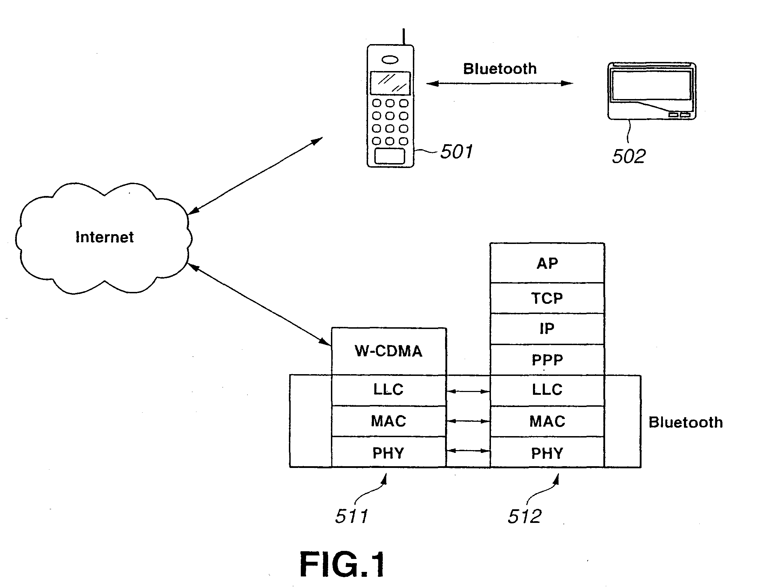

In the accompanying drawings FIG. 1 shows protocol stacks 511 and 512 installed on a mobile telephone 501 and a terminal unit 502 for connection to the Internet network from a wireless LAN system using the Bluetooth system.

For implementing a Bluetooth-compliant wireless LAN system, the protocol stacks 511 and 512 are provided with three lower layers: a physical layer (PHY), a media access control layer (MAC), and a logical link control layer (LLC). The mobile telephone 501 and the terminal unit 502 use these three layers' protocols for sending and receiving data in the wireless LAN system.

The LLC's higher layer for the protocol stack 512 includes PPP (Point to Point Protocol) needed for a dial-up connection to the Internet network. Further, the PPP's higher layer includes IP (Internet Protocol) and TCP (Transmission Control Protocol) needed for connection to the Internet network. These protocols send data to the application layer (AP).

Like the protocol stack 512, the protocol stack 511 includes a protocol for implementing the Bluetooth system in three lower layers. The protocol stack 511's higher layer includes W-CDMA (Wide Band-Code Division Multiple Access) and the like for mobile telephones. When placed in data communication mode, the protocol stack 511 provides connection to the Internet network via a mobile communication network.

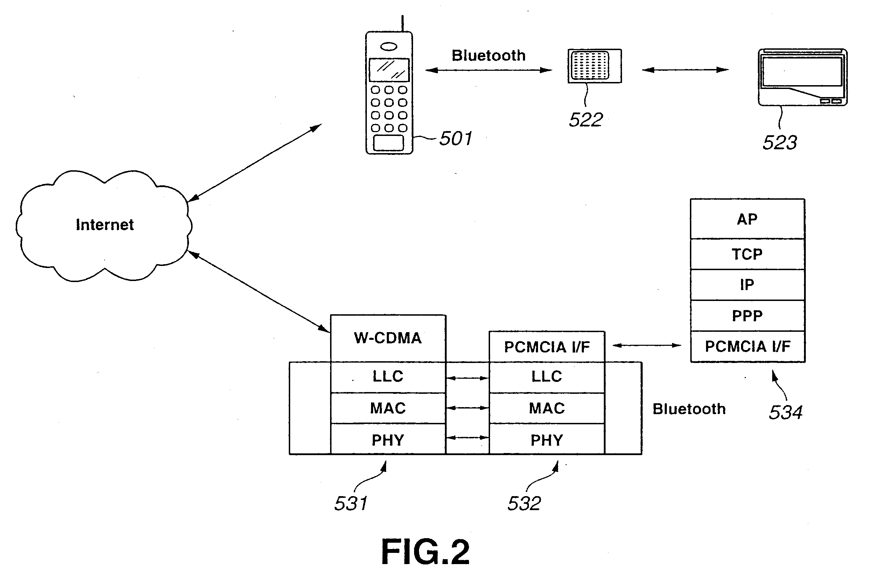

FIG. 2 shows protocol stacks 531, 532, and 534 installed on a mobile telephone 521, a PCMCIA card 522, and a terminal unit 523 for implementing another wireless LAN system.

The PCMCIA card 522 includes a wireless LAN function for providing a Bluetooth-compliant wireless LAN system. Like the protocol stack 531 for the mobile telephone 521, there are also provided the physical layer (PHY), the media access control layer (MAC), and the logical link control layer (LLC) for implementing a Bluetooth system. A protocol stack 532 for the PCMCIA card 522 specifies installation of PCMCIAI/F as the LLC's higher layer.

A protocol stack 534 for the terminal unit 523 specifies installation of PPP, IP, and TCP as higher layers for the PCMCIAI/F layer and installation of AP as the topmost layer.

The above-mentioned wireless LAN system assumes the terminal units 501 and 534 to be intelligent devices such as a personal computer, PDA, and the like. It is often the case that the terminal units 501 and 534 are provided with a network communication protocol such as TCP/IP for connection with the Internet network.

When AV (audio-visual) equipment including stereos and camcorders is used as a terminal unit for connection with the Internet network, installing a communication protocol in the AV equipment overloads the CPU (Central Processing Unit) in the AV equipment. In many cases, the AV equipment's built-in CPU provides lower throughput than a personal computer and may require a considerably long processing time.

In recent years, it is proposed to transfer image data and the like between AV equipment and a personal computer using cableless short-distance data communication interfaces such as IrDA and Bluetooth systems. If the AV equipment should perform communication control processing or transfer image data, the CPU thereof is further overloaded.

The present invention has been made in consideration of the foregoing. It is therefore an object of the present invention to decrease processing loads on devices for sending and receiving data by using short-distance wireless communication.

A communication control apparatus according to the present invention for solving the above-mentioned problems comprises: wire communication means for exchanging data with an attached host device; short-distance wireless communication means for exchanging data with an external communication network via a short-distance wireless communication network; storage means for storing at least a protocol for exchanging data with a host device via said wire communication means and a protocol for exchanging data via said short-distance wireless communication means; protocol stack construction means for constructing a protocol stack comprising at least one protocol stored in said storage means based on a host device attribute; and control means for controlling data transmission and reception for a host device via a logical interface provided from a protocol stack constructed by said protocol stack construction means.

Communication control means to which the present invention is applied is characterized by: inputting attribute information indicating an attribute of a host device when communication control means is attached to said host device; constructing a protocol stack comprising at least one of a plurality of protocols including a protocol for data exchange with a host device and a protocol for data exchange via a short-distance wireless communication network based on attribute information; and controlling data transmission and reception for a host device via a logical interface provided from said protocol stack.

As mentioned above, the communication control apparatus and the method thereof according to the present invention can input attribute information indicating attributes of an available host device, construct a protocol stack comprising at least one protocol based on the attribute information, and control transfer of data for the host device through a logical interface provided by the protocol stack. This eliminates the need for installing a protocol on host devices with low throughput such as audio equipment. The communication control apparatus and the method thereof according to the present invention can decrease loads on equipment which sends and receives data over a short-distance wireless communication network.

The invention will be further described by way of example with reference to the accompanying drawings, in which:-
FIG. 1 illustrates a wireless LAN system according to a first conventional technique;
FIG. 2 illustrates a wireless LAN system according to a second conventional technique;
FIG. 3 illustrates a network comprising a wireless LAN system including a wireless communication apparatus to which the present invention is applied;
FIG. 4 is a block diagram showing an internal configuration of a wireless communication apparatus to which the present invention is applied;
FIG. 5 is a block diagram showing internal configurations of a wireless communication apparatus and a host device to which the present invention is applied;
FIG. 6 illustrates protocol stacks and service access points provided by protocol stacks installed in a wireless communication apparatus to which the present invention is applied;
FIG. 7 illustrates a software module providing functions of a wireless communication apparatus to which the present invention is applied;
FIG. 8 shows how a management module activates modules to construct a protocol stack;
FIG. 9 shows a processing procedure for starting construction of a protocol stack when a host device is provided with the wireless communication apparatus to which the present invention is applied;
FIG. 10 depicts a protocol stack constructed by a wireless communication apparatus to which the present invention is applied when data is exchanged between a digital camera and a mail server;
FIG. 11 depicts a protocol stack constructed by a wireless communication apparatus to which the present invention is applied when image data is exchanged between a digital camera and another host device;
FIG. 12 depicts a protocol stack constructed by a wireless communication apparatus to which the present invention is applied when data is exchanged between a personal computer and another host device;
FIG. 13 shows processing procedures for a wireless communication apparatus and a host device when determining a service access point and a connection end point;
FIG. 14 is a flow chart showing a processing procedure in a host interface module for a wireless communication apparatus when acquiring a handle; and
FIG. 15 shows a relationship between a host interface module and a protocol module when acquiring a handle and notifying a host device of it.

Embodiments of the present invention will be described in further detail with reference to the accompanying drawings.

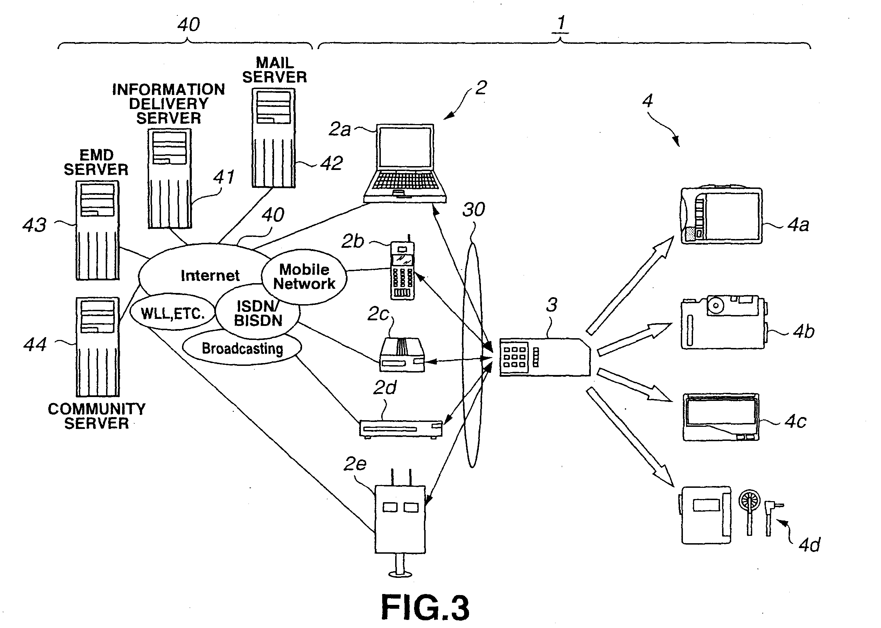

The present invention is included in a wireless LAN (Local Area Network) system 1 so configured as shown in FIG. 3.

As shown in FIG. 3, a public communication network 40 is connected to the wireless LAN system 1. This system contains gateways such as a communication device 2 (2a through 2e), a wireless communication apparatus 3, and a host device 4 on which the wireless communication apparatus 3 is mounted. A Bluetooth system is employed for implementing data communication within this system.

The Bluetooth system is a generic term for the short-distance wireless communication technology of which standardization was launched by five companies in United States, Europe, and Japan on May, 1998. The Bluetooth system provides data communication by constructing a short-distance wireless communication network which complies with a maximum data transmission rate of 1 Mbps (721 Kbps effective) and a maximum transmission distance of approximately 10 m. The Bluetooth system sets 79 channels with a 1 MHz bandwidth in a 2.4 GHz ISM (Industrial Scientific Medical) frequency band which is available unlicensed. A radio wave is exchanged among host devices 4 (4a through 4d) through the use of the spread spectrum technology for a frequency hopping system which switches channels 1,600 times per second.

A master/slave function is applied to each host device 4 included in the Bluetooth-compliant short-distance wireless communication network. Depending on processing contents, there are provided a master device and a slave device. The master device determines a frequency hopping pattern. The slave device is a communication destination controlled by the master device. A single master device can perform data communication with 7 slave devices at a time. A subnet called a "piconet" comprises a total of 8 master and slave devices. The host device 4 functions as a slave device in the wireless LAN system 1, namely the piconet. The host device 4 can be a slave device for 2 or more piconets concurrently.

The wireless LAN system 1 in FIG. 3 comprises, say, a communication device 2 (2a through 2e), a wireless communication apparatus 3, and a host device 4 (4a through 4e). The communication device 2 exchanges data with a public communication network 40 such as an Internet network. The wireless communication apparatus 3 exchanges packets with other host devices and the communication device 2 via a short-distance wireless communication network 30 according to the Bluetooth specification. The host device 4 performs a packet input/output operation with the wireless communication apparatus 3.

The host device 4 is a user-operated electronic device and is mechanically connected to the wireless communication apparatus 3. For example, the host device 4 includes a PDA (Personal Digital Assistant) 4a, a digital camera 4b, a mail processing terminal 4c, an EMD (Electronic Music Distribution) terminal 4d, and the like.

The communication device 2 is connected to the wireless communication apparatus 3 via the short-distance wireless communication network 30. The communication device 2 is also connected to the public communication network 40 and functions as a gateway for connecting the wireless communication apparatus 3 and the public communication network 40.

The communication device 2 includes, for example: a personal computer 2a equipped with a modem or the like for connection with the public communication network 40; a mobile telephone 2b, a TA/modem 2c, and an STB (Set Top Box) 2d employing the cdmaOne (Code Division Multiple Access) technology or the W-CDMA (Wide Band-Code Division Multiple Access) technology; and a quasi-public switching system 2e such as a base station for connecting the Bluetooth-compliant wireless communication apparatus 3 with the public communication network 40.

The public communication network 40 includes, for example: the Internet network connected to the personal computer 2a via the telephone line; a mobile communication network (Mobile Network) connected to the mobile telephone 2b; an ISDN (Integrated Services Digital Network)/B (broadband)-ISDN connected to the TA/modem 2c; a satellite communication network (Broadcasting) connected to the STB 2d; and a WLL (wireless local loop) connected to the quasi-public switching system 2e, and the like.

The Internet network included in the public communication network 40 further comprises an information delivery server 41, an electronic mail server 42, an EMD server 43, and a community server 44.

The information delivery server 42 receives a request from the host device 4 via the wireless communication apparatus 3 and the communication device 2 and sends information corresponding to the request to the host device 4. The electronic mail server 42 manages electronic mail and exchanges electronic mail with the host device 4 via the communication device 2 and the wireless communication apparatus 3. The EMD server 43 sends music information to the EMD terminal 4d of the host device 4 via the communication device 2 and the wireless communication apparatus 3 for managing music delivery services. The community server 44 supplies, say, the digital camera 4b of the host device 4 with, say, local information or news download services and manages information uploads from the host device 4.

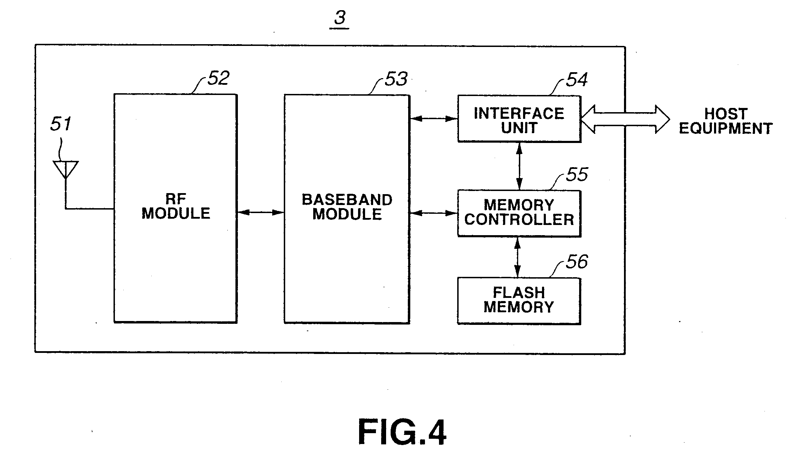

The wireless communication apparatus 3 is configured as shown in FIG. 4.

The wireless communication apparatus 3 comprises an antenna 51, an RF module 52, a baseband module 53, an interface unit 54, a memory controller 55, and a flash memory 56. The antenna 51 is used for exchanging data with respective units constituting the wireless LAN system 1 via the short-distance wireless communication network 30. The RF module 52 generates a radiofrequency (RF) signal and detects a radiofrequency signal from the antenna 51. The baseband module 53 manages the entire apparatus. The interface unit 54 performs a data input/output operation with the host device 4.

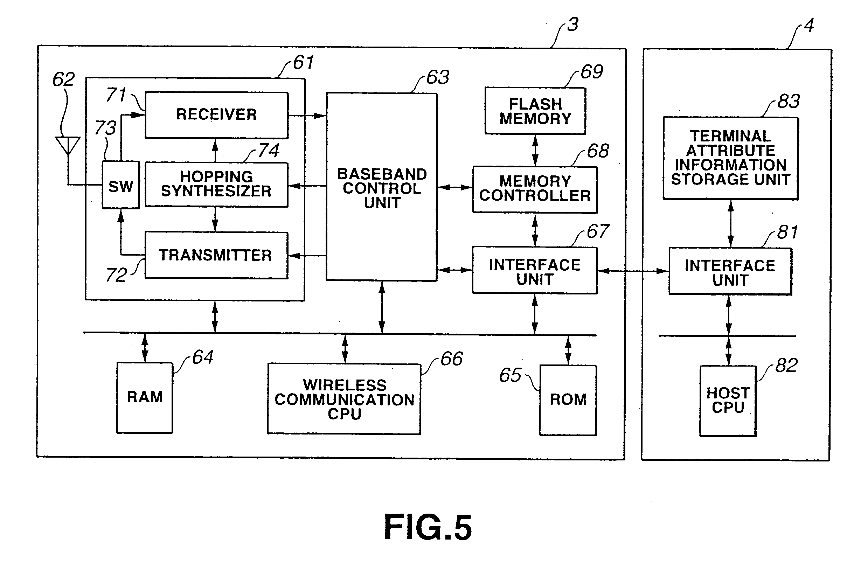

More specifically, as shown in FIG. 5, the wireless communication apparatus 3 comprises a communication control unit 61, an antenna 62, a baseband control unit 63, and an interface unit 67. The communication control unit 61 is equivalent to the above-mentioned RF module 52 and performs wireless communications in the wireless LAN system 1. The antenna 62 is equivalent to the antenna 51 in FIG. 4. The baseband control unit 63 controls communications performed by the radiofrequency control unit 51. The interface unit 67 creates, inputs, and outputs packets in conjunction with the host device 4.

The antenna 62 outputs or detects signals in the 2.4 GHz frequency band (2.402 GHz through 2.480 GHz). The antenna 62 sends data from the communication control unit 61 to the communication device 2 via the short-distance wireless communication network 30. The antenna 62 receives signals from the communication device 2 via the short-distance wireless communication network 30 and outputs received signals to the communication control unit 61.

The antenna 62 sends or receives data comprising a specified number of bits in the short-distance wireless communication network 30. A minimum unit of data to be transmitted is a packet which contains data, commands, or responses.

The communication control unit 61 comprises a receiver 71, a transmitter 72, a switch 73, and a hopping synthesizer 74. The receiver 71 receives packets from the antenna 62. The transmitter 72 sends packets to the antenna 62. The switch 73 determines whether to send packets from the transmitter 72 via the antenna 62 or output packets from the antenna 62 to the receiver 71. The hopping synthesizer 74 spreads a spectrum with respect to packets in the receiver 71 and the transmitter 72 according to frequency hopping.

The switch 73 operates according to a control signal from a CPU (Central Processing Unit) 60 to be described later. When receiving a packet from the antenna 62, the switch 73 operates to output that packet to the receiver 71. When sending packets from the antenna 62, the switch 73 operates to output a packet from the transmitter 72.

The receiver 71 receives packets from the switch 73 and outputs them to the baseband control unit 63. The hopping synthesizer 74 specifies a hopping frequency pattern for the receiver 71. The receiver 71 receives packets according to the frequency pattern for receiving packets from the switch 73 and outputs received packets to the baseband control unit 63. At this time, the receiver 71 outputs packets to the baseband control unit 63 by, say, multiplying frequency patterns specified by the hopping synthesizer 74 in units of packets.

The baseband control unit 63 generates and primary-modulates a packet. This packet is input to the transmitter 72 and is output to the switch 73. The packet is then output from the antenna 62 to the communication device 2 via the short-distance wireless communication network 30. The hopping synthesizer 74 specifies a frequency pattern for the transmitter 72. The transmitter 72 outputs packets to the switch 73 according to the specified frequency pattern. At this time, the transmitter 72 converts frequencies in units of packets according to the frequency pattern specified by the hopping synthesizer 74.

The hopping synthesizer 74 is assigned a frequency hopping pattern from the baseband control unit 63. When receiving packets from the antenna 62, the hopping synthesizer 74 outputs to the receiver 71 a frequency pattern in the hopping pattern specified by the baseband control unit 63. When sending packets from the antenna 62, the hopping synthesizer 74 outputs a frequency pattern to the transmitter 72. The transmitter 72 uses this frequency pattern for applying frequency conversion to data from the baseband control unit 63. The baseband control unit 63 controls the hopping synthesizer 74 so as to specify the same frequency pattern for the receiver 71 and the transmitter 72.

The hopping synthesizer 74 performs frequency conversion so that frequency hopping occurs 1,600 times per second on 79 channels (2.402 GHz through 2.480 GHz) on a 1-MHz basis.

The baseband control unit 63 performs the following processing according to control signals from a wireless communication CPU 66 to be described later.

The baseband control unit 63 is supplied with data in units of packets from the receiver 71 and demodulates packets which are frequency-modulated by the frequency hopping. When packets are transmitted from the antenna 62, the baseband control unit 63 primary-modulates a packet to be transmitted and outputs it to the transmitter 72.

The baseband control unit 63 provides the hopping synthesizer 74 with a hopping pattern for controlling the hopping synthesizer 74. Consequently, the baseband control unit 63 controls tuning for transmitting packets from the wireless communication apparatus 3 and also controls tuning for receiving packets. As a hopping pattern, the baseband control unit 63 provides the hopping synthesizer 74 with a frequency pattern of, say, f(k), f(k+1), f(k+2), ... at a specified interval

Further, the baseband control unit 63 converts a packet to a specified packet format and outputs it to the transmitter 72 on a packet basis. The baseband control unit 63 also disassembles a specifically formatted packet from the receiver 71 and outputs that packet to the wireless communication CPU 66 via the interface unit 67 or a data bus.

The interface unit 67 operates according to control signals from the wireless communication CPU 66 and creates or disassembles packets to be input to or output from the host device 4. When a packet is received from the antenna 62, it is input to the interface unit 67 via the communication control unit 61 and the baseband control unit 63. The interface unit 67 applies specified conversion processing to that packet and outputs it to the host device 4. When packets are transmitted from the antenna 62, the interface unit 67 outputs a packet input via the host device 4 to the baseband control unit 63.

Furthermore, the wireless communication apparatus 3 is provided with a memory controller 68 connected to the interface unit 67 and a flash memory 69 connected to the memory controller 68.

The memory controller 68 is supplied with image data and the like via the interface unit 67, performs processing according to a serial interface protocol, and controls contents of the flash memory 69.

The flash memory 69 stores data under the control of the memory controller 68. The flash memory 69 stores a network access account, authentication password or similar information, personal information used for applications, network setup information needed for network connections, and configuration information and the like for defining relationship between elements included in the wireless communication apparatus 3.

The flash memory 69 stores a protocol management table. This table describes relationship among types of the host device 4 and protocol stacks constructed by the wireless communication apparatus 3.

Yet further, the wireless communication apparatus 3 is provided with RAM (Random Access Memory) 64, ROM (Read Only Memory) 65, and the wireless communication CPU 66.

The ROM 65 stores a control program for the wireless communication CPU 66 to control the above-mentioned units and a protocol stack comprising a plurality of protocols.

The wireless communication CPU 66 controls units constituting the wireless communication apparatus 3 via the data bus. Reading a control program from the ROM 65 generates control signals. The wireless communication CPU 66 uses the RAM 64 as a work area for storing data as needed and executes the control program to generate a control signal. Thereby, the wireless communication CPU 66 controls the baseband control unit 63, the communication control unit 61, and the interface unit 67. The wireless communication CPU 66 generates commands for controlling communications with other devices constituting the wireless LAN system 1. The wireless communication CPU 66 exchanges packets with the host device 4 via the interface unit 67. The wireless communication CPU 66 performs processing by executing control programs, network communication protocols, or network application protocols. This will be described below in further detail.

The host device 4 comprises an interface unit 81, a host CPU 82, and a terminal attribute storage unit 83. The interface unit 81 inputs or outputs data with the interface unit 67 in the wireless communication apparatus 3. The host CPU 82 controls the interface unit 81 and the like via the data bus. The terminal attribute storage unit 83 stores terminal attribute information.

The interface unit 81 manages data input/output with the interface unit 67 in the wireless communication apparatus 3. The interface unit 81 comprises a serial interface capable of bidirectionally transmitting packets. The interface unit 81 can create, input, or output packets including data, commands, or responses.

The CPU 82 is operated by a user or data generated in the host device 4 to generate packets including commands and the like based on the generated operational input signals and the like. The host CPU 82 executes processing in the application layer to generate data, commands, or responses to commands.

The terminal attribute storage unit 83 stores terminal attribute information about functions of the host CPU 82. The host CPU 82 controls and reads contents of this information. The terminal attribute information stored in the terminal attribute storage unit 83 includes attributes of the host device 4. More specifically, the terminal attribute information includes information about types of the host device 4 such as a personal computer, a digital camera, and the like, information about a protocol stack in the host device 4, information about application programs, information about a display mechanism of the host device 4, and information about an input operation mechanism including character input means such as buttons or a keyboard.

The wireless communication apparatus 3 and the host device 4 maintain a master/slave architecture. The host device 4 becomes a master. The wireless communication apparatus 3 becomes a slave. The wireless communication apparatus 3 operates according to packets and the like from the host CPU 82. For example, there is a case where the wireless communication apparatus 3 outputs data to the host device 4. In this case, the wireless communication apparatus 3 can output data to the host device 4 only when the host CPU 82 provides the wireless communication apparatus 3 with a packet granting a permission to access a serial data line connecting with the host device 4.

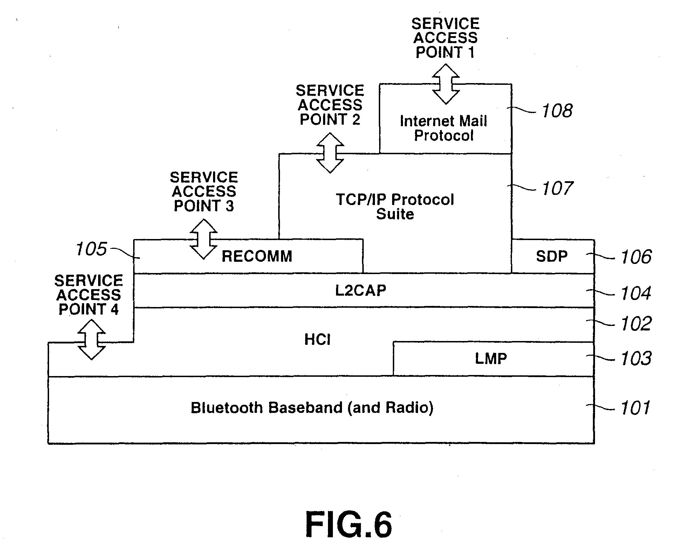

The following describes a protocol stack comprising protocols stored in the ROM 65 for the wireless communication apparatus 3 with reference to FIG. 6.

There are provided Baseband 101 and Radio as the lowest physical layer of the protocol stack. The physical layer converts digital data to analog data and transmits or receives data from the antenna 62. The physical layer performs primary modulation according to a sequence of digital data comprising 0 and 1 and further transmits the data over a carrier wave in the 2.4 GHz frequency band. Carrier waves are constantly switched according to frequency hopping which varies frequencies in every data transmission (slot).

Data is transmitted and received alternately for each slot. During a reception slot, a carrier wave in the 2.4 GHz frequency band is removed from the signal received at the antenna. The signal is further demodulated to extract a sequence of digital data comprising 0 and 1. A frequency of a carrier wave to be removed constantly varies with frequency hopping. A hopping sequence is predetermined for a corresponding communication description.

On the physical later, there is installed a link layer comprising protocols such as an LMP (Link Management Protocol) 103, an HCI (Host Control Interface) 102, an L2CAP (LogicalLink Control & Adaptation Protocol) 104, and an RFCOMM 105. The main role of the link layer is to control processing for constructing the short-distance wireless communication network 30 to which the Bluetooth system is applied.

The link layer transmits data by, say, adding various communication information to original data. When data is received, the link layer returns a response indicating whether that data is received correctly. When the data is not received correctly, the link layer requests for retransmission. If the destination cannot receive data after a specified number of retries, the link layer cancels the transmission. When a reception buffer is to overflow, the link layer requests the description to temporarily stop the transmission. Data is provided with error detection or correction codes as well as in addition to communication control information for protection against communication path errors.

The HCI 102 provides an interface between host devices 4 specified by the Bluetooth system. The HCI 102 performs processing for providing a logical interface for connection with the host device 4 as a personal computer.

The LMP 103 controls link states with connection descriptions during the Bluetooth-based communication with respect to: establishing and releasing connection states; controlling modes corresponding to availability of data to be transmitted and frequency of communications; switching between packet types corresponding to communication path states; authenticating data communication; and encrypting data during data communication.

The L2CAP 104 defines logical channels. A single physical communication path establishes connection between two Bluetooth-compliant communication devices. A plurality of logical channels can be defined for this physical path. This makes it possible to send and receive various types of higher-protocol data at a time. When large-size data is passed from a higher-level protocol, that data is divided into packets each with a specified size defined in the Baseband 101. The transmitting side transmits disassembled packets. The receiving side assembles these packets into the original mass of data.

The L2CAP 104 also exchanges information with the destination host device 4 compliant with the Bluetooth system concerning a data transfer rate or a response to transmission.

The RFCOMM 105 provides enhanced AT commands for controlling a Bluetooth-compliant link layer. The RFCOMM 105 provides a serial port emulation function.

On the link layer, the network communication protocol 107 is installed as a transport layer. The network communication protocol 107 provides an interface for transferring data over Internet. The network communication protocol 107 comprises TCP (Transmission Control Protocol), UDP (User Datagram Protocol), IP (Internet Protocol), ICMP (Internet Control Message Protocol), PPP (Point to Point Protocol), and a DNS (Domain Memory System) resolver.

On the transport layer, there is an application layer in which a network application protocol 108 is installed. An Internet Mail Protocol is installed on the network application protocol 108 to provide an interface for transmitting mail between mail servers.

The network application protocol 108 includes POP3 (Post Office Protocol Version 3) or IMAP4 (Internet Message Access Protocol Version 4) for receiving electronic mail from mail servers and SMTP (Simple Mail Transfer Protocol) for sending electronic mail to mail servers.

A portion of the application layer describes programs associated with operations actually performed by each device. This portion depends on devices.

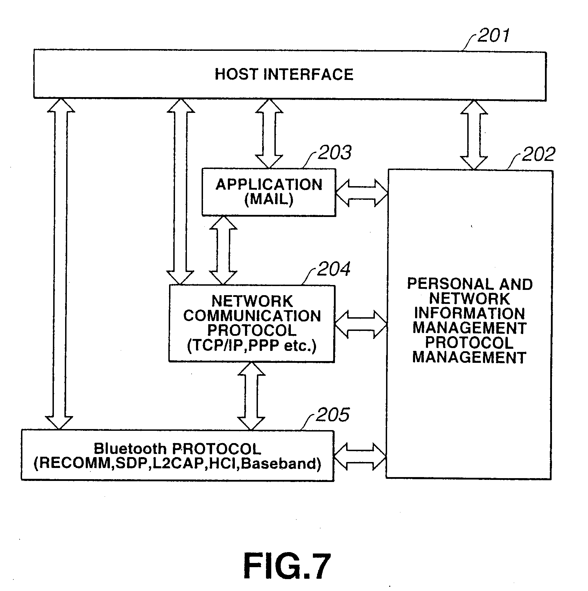

The following describes software modules stored in the ROM 65 for the wireless communication apparatus 3 with reference to FIG. 7.

FIG. 7 diagrams software modules which provide functions determined by a protocol stack or a program stored in the ROM 65 for the wireless communication apparatus 3.

According to FIG. 7, the wireless communication apparatus 3 performs various processing by maintaining interrelationship between a host interface module 201, a management module 202, an application module 203, a network communication protocol module 204, and a Bluetooth protocol module 205.

The host interface module 201 controls a logical interface with the host device 4. Further, the host interface module 201 controls communication between host devices 4 included in the short-distance wireless communication network 30.

The management module 202 manages personal information, network setup information and the like stored in the flash memory 69, manages protocols constituting a protocol stack, and constructs the protocol stack.

The application module 203 performs processing according to a protocol installed in the network application protocol 108. The application module 203 provides a mail application by installing an Internet mail protocol as the network application protocol 108.

The network communication protocol module 204 performs processing according to a protocol installed in the network communication protocol 107. The network communication protocol module 204 communicates with the public communication network 40 by installing TCP, IP, PPP, and the like as the network communication protocol 107.

The Bluetooth protocol module 205 performs processing according to a protocol for the link layer in the protocol stack. The Bluetooth protocol module 205 includes processing such as the RFCOMM 105, link control, baseband control, and the like.

The management module 202 controls each of software modules representing functions of the wireless communication apparatus 3.

There are provided the application module 203, the network communication protocol module 204, and the Bluetooth protocol module 205. The management module 202 determines which of these modules to start according to the terminal attribute information stored in the terminal attribute storage unit 83 of the host device 4 for constructing a protocol stack.

When acquiring the terminal attribute information, the management module 202 executes at least one of the following four processes: 1) to activate POP and SMTP out of the application module 203, 2) to activate the DNS resolver, TCP, IP, and PPP out of the network communication protocol module 204, 3) to activate a Bluetooth higher-level protocol 205a by starting part of the Bluetooth protocol module 205 such as RFCOMM, SDP, and L2CAP, 4) to activate a Bluetooth lower-level protocol 205b by starting part of the Bluetooth protocol module 205 such as HCI, LMP, and Baseband.

By performing these processes, the wireless communication apparatus 3 provides four logical interfaces which function as service access points of the protocol stack.

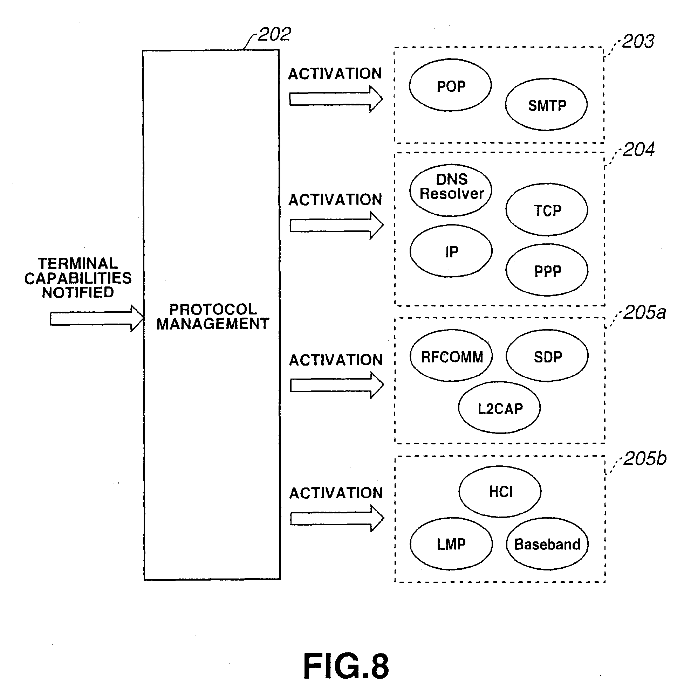

As shown in FIG. 8, the management module 202 provides a service access point 1 for the application interface as a logical interface by activating the Bluetooth protocol module 205, the network communication protocol module 204, and the application module 203. The management module 202 provides a service access point 2 for the network interface as a logical interface by activating the Bluetooth protocol module 205 and the network communication protocol module 204. Further, the management module 202 provides a service access point 3 for the RFCOMM interface as a logical interface by activating just the Bluetooth protocol module 205. Yet further, the management module 202 provides a service access point 4 for the HCI interface as a logical interface by activating just the Bluetooth lower-level protocol 205b.

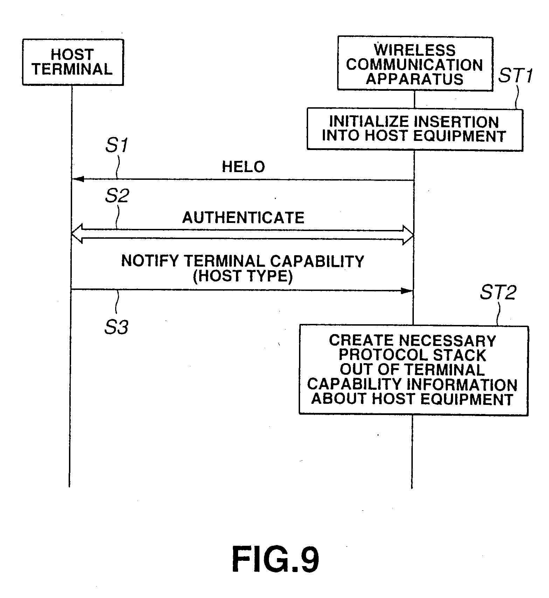

FIG. 9 explains a processing procedure for starting construction of the protocol stack when the wireless communication apparatus 3 is attached to the host device 4.

When the wireless communication apparatus 3 is attached to the host device 4 at step ST1, the wireless communication apparatus 3 starts initialization. After the initialization, the wireless communication apparatus 3 sends a HELO command packet S1 to the host device 4 and receives a response to the HELO command. This command declares the use of the host device 4.

The wireless communication apparatus 3 and the host device 4 send and receive commands and responses with each other to perform an authentication process for ensuring an access permission of the wireless communication apparatus 3. For example, this authentication process compares a password entered to the host device 4 with a password registered in the wireless communication apparatus 3.

Then, the host device 4 notifies a terminal attribute by sending the terminal attribute information stored in the terminal attribute storage unit 83 to the wireless communication apparatus 3.

At step ST2, the wireless communication apparatus 3 determines the host device 4's attribute based on the terminal attribute information in the wireless communication apparatus 3. This allows the management module 202 to construct a protocol stack. The wireless communication apparatus 3 uses the RAM 64 as a work area for constructing the protocol stack. The RAM 64 stores the protocol stack.

At this time, the wireless communication apparatus 3 determines the type of the host device 4 as an attribute thereof. The wireless communication apparatus 3 references a protocol management table as shown in Table 1 to construct the protocol stack in the RAM 64.

**Table 1**

| Host type | Protocol |
|---|---|
| Digital camera | SMTP/POP |
| | TCP/UDP |
| | IP/ICMP |
| | RFCOMM/SDP/L2CAP |
| | HCI/LMP/Link Control |
| PC | HCI/LMP/Link Control |

For example, it is assumed that the flash memory 69 stores the protocol management table as shown in Table 1. When the host device 4 type is determined to be a digital camera, the wireless communication apparatus 3 constructs the protocol stack by activating the protocols from the Baseband 101 to the network application protocol 108. When the host device 4 type is determined to be a personal computer, the wireless communication apparatus 3 constructs the protocol stack by activating the protocols Baseband 101, HCI 102, and LMP 103.

The following describes construction of a protocol stack in the wireless communication apparatus 3 corresponding to a host device which is equipped with the wireless communication apparatus 3 comprising the above-mentioned software modules.

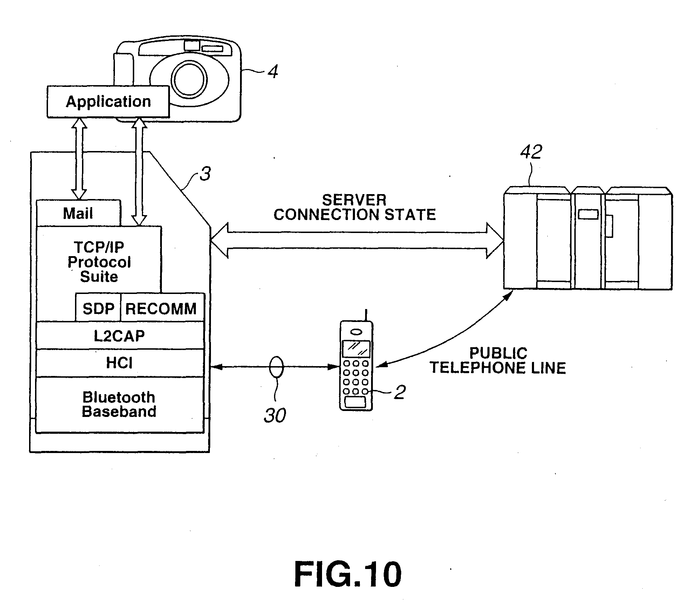

FIG. 10 shows an example of transferring electronic mail between the host device 4 and the mail server 42. In this example, a digital camera is used as the host device 4. The communication device 2 such as a mobile telephone and the like is used as a gateway. The wireless communication apparatus 3 is connected to the mail server 42 via a dial-up connection. The communication device 2, the wireless communication apparatus 3, and the host device 4 are connected to the server. At this time, the wireless communication apparatus 3 activates protocols up to the network application protocol 108 for constructing the protocol stack.

The wireless communication apparatus 3 provides an application for the host device 4 with the service access point 1 and the service access point 2 as logical interfaces. In this case, the wireless communication apparatus 3 provides the service access point 1 using the network application protocol 108 as a logical interface and the service access point 2 using the network application protocol 107 as a logical interface and.

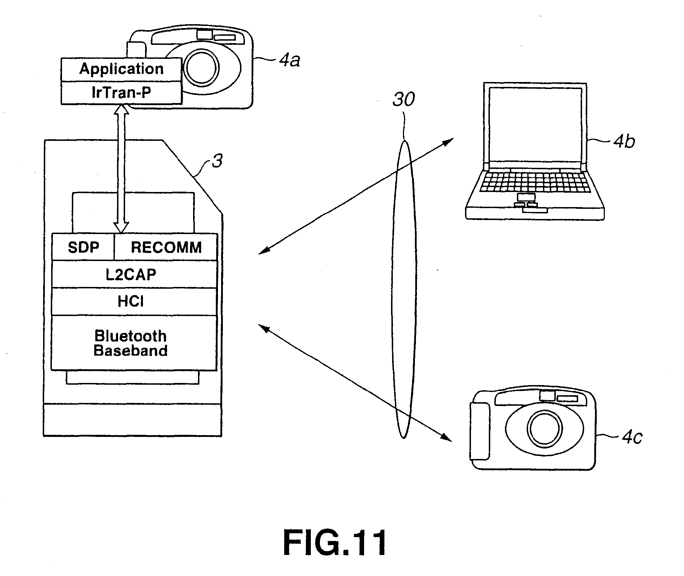

FIG. 11 shows an example of image data transfer between the host device 4 and another host device 4A or 4B in the short-distance wireless communication network 30. In this example, the host device 4 is a digital camera equipped with an application and IrTran-P. The wireless communication apparatus 3 activates protocols up to RFCOMM 105 for constructing the protocol stack. The wireless communication apparatus 3 provides the host device 4's IrTran-P with the service access point 3 as a logical interface. It is assumed that the host device in FIG. 11 is provided with a protocol for peer-to-peer image data transfer.

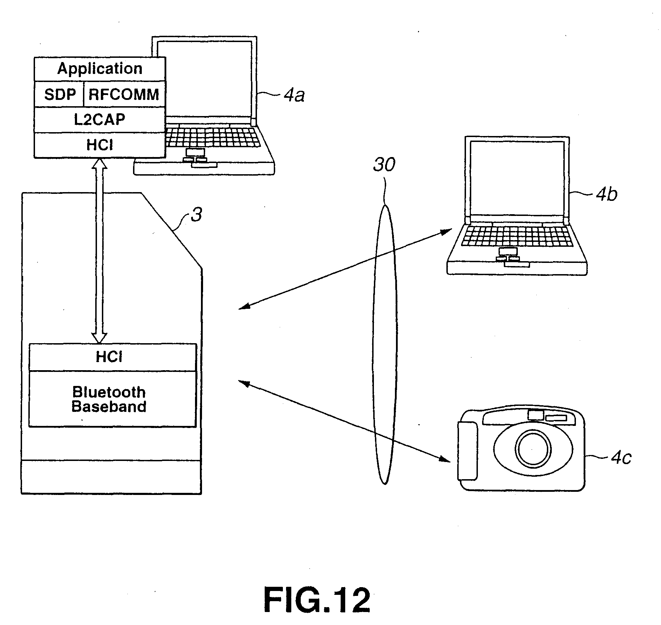

FIG. 12 shows an example of data transfer between the host device 4 and another host device 4C or 4D in the short-distance wireless communication network 30. In this example, the host device 4 is a personal computer. It is assumed that the personal computer is provided with a network application protocol, RFCOMM, SDP, L2CAP, and HCI. The wireless communication apparatus 3 activates protocols up to HCI 102 for constructing the protocol stack. The wireless communication apparatus 3 provides the service access point 4 as a logical interface for connection with the host device 4's HCI.

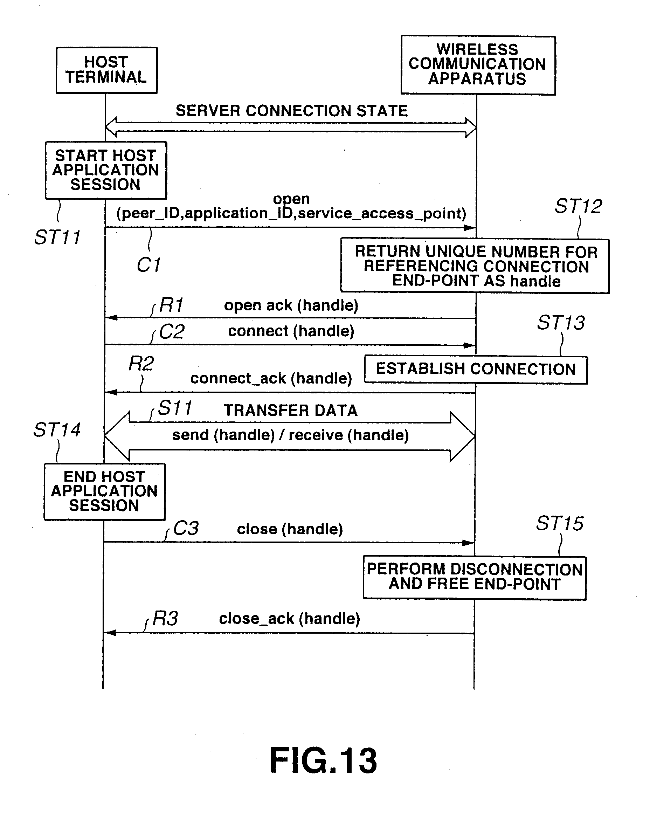

With reference to FIG. 13, the following describes processing of the wireless communication apparatus 3 and the host device 4 for determining a service access point indicating a logical interface for the protocol stack and a connection end point indicating a logical connection.

For determining a service access point and a connection end point, it is necessary to complete connection between the host device 4 and the mail server 42 and place the host device 4 and the wireless communication apparatus 3 in a server connection state. The server connection state means completely establishing a link to other communication terminals in the short-distance wireless communication network 30, a link to a telephone line, and a connection to a provider in the public communication network 40.

As shown in FIG. 13, the host device 4 activates an internally stored application at step ST 11. The host device 4 then issues an open command C1 to the wireless communication apparatus 3 for starting the application with the wireless communication apparatus 3. The host device 4 places peer_ID indicating itself, application_ID indicating an application ID, and service_access_point indicating a requested service access point as parameters in the open command C1.

When receiving the open command C1, the wireless communication apparatus 3 establishes a connection end point corresponding to the service access point requested from the host device 4 at step ST12. The wireless communication apparatus 3 creates a handle which is a unique number for referencing the connection end point. The wireless communication apparatus 3 returns an open_ack response R1 including the handle as a parameter to the host device 4. Processing of the wireless communication apparatus 3 at step ST12 will be in more detail later.

The handle obtained by the wireless communication apparatus 3 is added as a parameter to commands and responses handled between the wireless communication apparatus 3 and the host device 4 during subsequent processing. Namely, the wireless communication apparatus 3 and the host device 4 use a handle for mutually identifying service access points when establishing a connection, transferring data on the connection, and releasing the connection. By doing so, the wireless communication apparatus 3 aims to provide a common logical interface independent of service access points.

After receiving an open_ack response R1, the host device 4 then issues a connect command C2 to the wireless communication apparatus 3. This command requests to establish a connection with the wireless communication apparatus 3.

At step ST13, the wireless communication apparatus 3 references the handle included as a parameter and performs processing for establishing a connection via the connection end point determined at step ST12. In response to establishment of the connection, the wireless communication apparatus 3 outputs a connect_ack response R2 for the connect command C2 to the host device 4.

At this point, the host device 4 and the wireless communication apparatus 3 are ready for transferring data containing handles as parameters. When transferring data to the wireless communication apparatus 3, the host device 4 also sends a send command containing data and the handle as parameters. The wireless communication apparatus 3 returns to the host device 4 a receive response which indicates reception of the data and contains the handle as a parameter.

When transfer of all data is complete, the host device 4 performs processing for terminating the application execution at step ST14. The host device 4 then outputs a close command C3 containing the handle as a parameter to the wireless communication apparatus 3.

When receiving the close command C3, the wireless communication apparatus 3 performs disconnection and releases the connection end point at step ST15. The wireless communication apparatus 3 then issues to the host device 4 a close_ack response R3 which indicates termination of the connection with the host device 4 and contains the handle as a parameter.

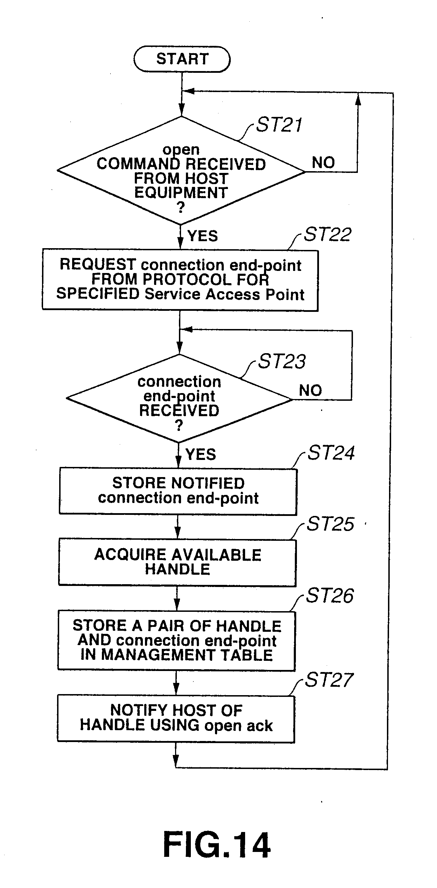

The following describes a processing procedure in the host interface module 201 for the wireless communication apparatus 3 for obtaining a handle at step ST12 in FIG. 13 with reference to FIG. 14.

According to the flow chart in FIG. 14, the host interface module 201 determines whether the open command C1 is received from the host device 4 at step ST21. When the host interface module 201 determines that the open command C1 is received, control proceeds to step ST22. When the open command C1 is not received, step ST21 is repeated.

At step ST22, the host interface module 201 interprets parameters contained in the open command C1 and requests the protocol modules 203, 204, and 205 corresponding to specified service access points for connection end points.

At step ST23, the host interface module 201 determines whether connection end points are received from the protocol modules 203, 204, and 205. When connection end points are received, control proceeds to step ST24. When no connection end points are received, step ST23 is repeated.

At step ST24, the host interface module 201 temporarily stores connection end points notified from the protocol modules 203, 204, and 205.

At step ST25, the host interface module 201 obtains a unique number for referencing the connection end point notified at step ST23. This unique number is used as a handle. Namely, the host interface module 201 obtains a handle used for connection with the host interface module 201.

At step ST26, the host interface module 201 stores the handle obtained at step ST25 and the connection end point in pairs in a handle management table.

The handle management table describes relationship among handle numbers, handle utilization, and connection end points. The handle management table stores handles used for connection with the host interface module 201.

At step ST27, the host interface module 201 outputs to the host device 4 the open_ack response R1 which contains the handle stored as a parameter in the handle management table at step ST26. The host interface module 201 notifies the host device 4 that connection is available by using the handle indicating the service access point specified by the host device 4. The host interface module 201 then returns to step ST21 and waits for a next request.

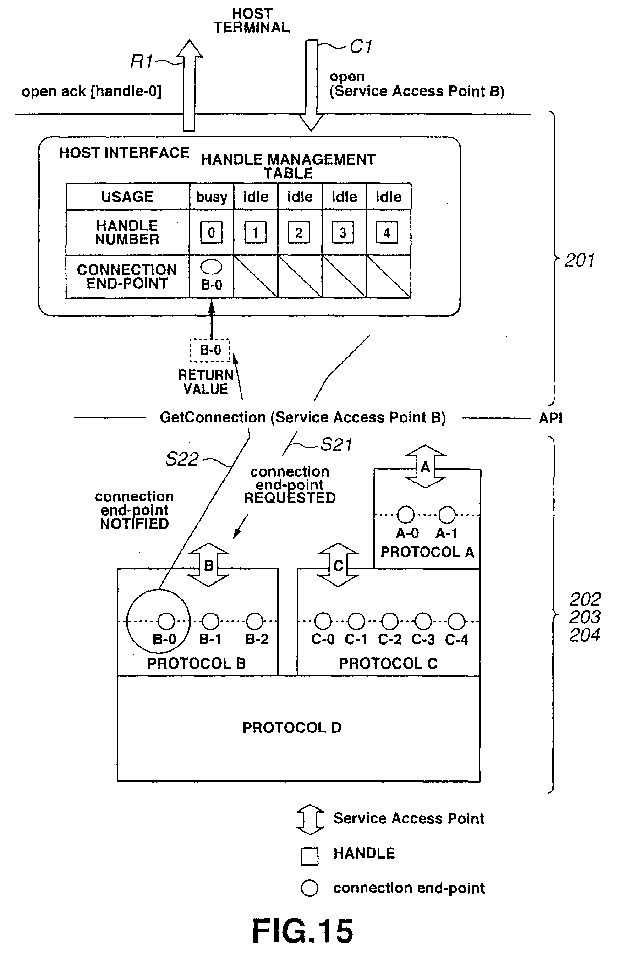

With reference to FIG. 15, The following describes relationship between the host interface module and the protocol module when the host interface module 201 performs the process as shown in FIG. 14 to obtain the handle and notify the host device 4 of it.

As shown in FIG. 15, the host device 4 first supplies the host interface module with the open command C1. This command specifies a service access point B as a service access point for requesting connection with the wireless communication apparatus 3.

The host interface module notifies a connection end point request S21 to a protocol module B which supplies a service access point B requested from the host device 4. For example, the management module manages a protocol module A, a protocol module B, and a protocol module C. Of these modules, the host interface module notifies the request S21 to the protocol module B which supplies the service access point B.

In response to the connection end point request S21, the protocol module B supplies the host interface module with a connection end point notification S22 indicating that connection end point B-0 will be provided as a logical connection.

The host interface module obtains B-0 as a return value. Finding that the utilization of handle number 0 is "idle", the host interface module obtains a handle with handle number 0. The host interface module then stores the handle and the connection end point B-0 in pairs in the handle management table.

The host interface module then issues the open_ack response R1 which contains as a parameter the handle with handle number 0 stored in the handle management table.

As shown in FIG. 15, protocol modules A through D provide a plurality of connection end points for allowing logical connection multiplexing. The protocol module A provides connection end points A-0 and A-1 as logical connections. The protocol module B provides connection end points B-0 through B-2 as logical connections. The protocol module C provides connection end points C-0 through C-4 as logical connections. These protocol modules A through C are installed on the protocol module D.

By performing the above-mentioned processing, the wireless communication apparatus 3 allows a single service access point to access a plurality of logical connections by means of handles.

As mentioned above, the wireless communication apparatus 3 constructs a protocol stack by referencing the protocol management table stored in the flash memory 69 according to terminal attribute information from the host device 4. Accordingly, the wireless communication apparatus 3 can comply with a wide range of host devices 4 from IT devices such as personal computers and PDAs to audio devices having no TCP/IP protocol stacks by identifying the host device 4's attribute and constructing a protocol stack corresponding to the host device 4.

When the wireless communication apparatus 3 is attached to the host device 4 such as an audio device, it is possible to implement data communication between the audio device and the public communication network 40 by constructing a protocol stack including a network communication protocol such as TCP/IP. By performing Bluetooth protocol or TCP/IP processing, for example, the wireless communication apparatus 3 can decrease processing loads on devices which send and receive data using short-distance wireless communication network 30. Even if an audio device is weak in processing protocols or has no protocol, the wireless communication apparatus 3 itself constructs a protocol stack and performs protocol-related processing, thus eliminating the need for installing a protocol on the host device 4 such as audio devices and the like.

Further, when the wireless communication apparatus 3 is equipped with the host device 4 having a protocol stack such as a personal computer, PDA, and the like, it is possible to eliminate the need for constructing a protocol stack and effectively use the memory space in the RAM 64.

## Claims

1. A communication control apparatus comprising:
wire communication means for exchanging data with an attached host device;
short-distance wireless communication means for exchanging data with an external communication network via a short-distance wireless communication network;
storage means for storing at least a protocol for exchanging data with a host device via said wire communication means and a protocol for exchanging data via said short-distance wireless communication means; and
protocol stack construction means for constructing a protocol stack comprising at least one protocol stored in said storage means based on a host device attribute; and control means for controlling data transmission and reception for a host device via a logical interface provided from a protocol stack constructed by said protocol stack construction means.

2. The communication control apparatus according to claim 1, wherein said control means supplies a plurality of logical connections to a logical interface provided from a protocol stack constructed by said protocol stack construction means and controls data transmission and reception for a host device via any of logical connections.

3. The communication control apparatus according to claim 1 or 2, wherein said storage means stores one of a network application protocol, a network communication protocol, and a protocol for exchanging data with other host devices included in said short-distance wireless communication network.

4. A communication control method comprises:
inputting attribute information indicating an attribute of a host device when communication control means is attached to said host device;
constructing a protocol stack comprising at least one of a plurality of protocols including a protocol for data exchange with a host device and a protocol for data exchange via a short-distance wireless communication network based on attribute information; and
controlling data transmission and reception for a host device via a logical interface provided from said protocol stack.

5. The communication control method according to claim 4, further comprising:
supplying a plurality of logical connections to a logical interface provided from said protocol stack; and
controlling data transmission and reception for a host device via any of said logical connections.

6. The communication control method according to claim 4 or 5, further comprising:
constructing a protocol stack comprising at least one of a network application protocol, a network communication protocol, and a protocol for exchanging data with other host devices included in said short-distance wireless communication network; and
controlling data exchange with other host devices included in said short-distance wireless communication network or data exchange between a host device and a communication network other than said short-distance wireless communication network.
